# FASCICULE DE BREVET EUROPEEN

(11) **EP 4 045 400 B1**
(45) Date de publication et mention de la délivrance du brevet: **13.12.2023**
(21) Numéro de dépôt: 20790001.0
(22) Date de dépôt: 15.10.2020
(51) Int. Cl.: B64C 25/28, B64D 45/00, E05B 15/00, E05B 81/64, E05C 3/24

(54) **BOITIER D'ACCROCHAGE MUNI DE MOYENS DE DETECTION DE RETENUE**
SICHERUNGSMECHANISMUS MIT RETENTIONSDETEKTIONSMITTELN
UPLOCK PROVIDED WITH RETENTION DETECTION MEANS

(30) Priorité: 17.10.2019 FR 1911645
(43) Date de publication de la demande: 24.08.2022
(73) Titulaire: Safran Landing Systems, 78140 Vélizy-Villacoublay (FR)
(72) Inventeur: PASCAL, Vincent, 77550 MOISSY-CRAMAYEL (FR); DUFAY, Ludovic, 77550 MOISSY-CRAMAYEL (FR)
(74) Mandataire: Lavialle, Bruno François Stéphane
(86) Numéro de dépôt international: PCT/EP2020/079134
(87) Numéro de publication internationale: WO 2021/074348

(56) Documents cités:
- EP-A1- 1 342 664
- WO-A1-2018/189299
- GB-A- 2 561 383

## Description

L'invention concerne un boîtier d'accrochage tel que ceux qui sont utilisés dans les aéronefs pour la retenue en position escamotée d'atterrisseurs de l'aéronef ou de portes de fermeture de soutes, et plus généralement pour la retenue de tout élément mobile de l'aéronef dans l'une de ses positions.

### ARRIERE PLAN DE L'INVENTION

De façon connue en soi, un tel boîtier d'accrochage comprend un crochet monté pivotant sur le boîtier entre une position de retenue et une position de libération, et un organe de verrouillage du crochet qui est rappelé vers une position de verrouillage du crochet quand celui-ci est amené en position de retenue, et qui est repoussé par un actionneur de déverrouillage vers une position de déverrouillage pour permettre au crochet de basculer vers la position de libération et ainsi libérer l'élément mobile.

Le crochet coopère avec une olive de l'élément mobile qui, quand l'élément arrive vers la position dans laquelle il doit être retenu, pousse le crochet vers la position de retenue dans laquelle le crochet est automatiquement verrouillé par l'organe de verrouillage. L'olive de l'élément mobile est alors emprisonnée dans le crochet et ne peut s'en libérer. Pour permettre la libération de l'élément mobile, il convient de repousser l'organe de verrouillage en position de déverrouillage, par exemple au moyen d'un actionneur de déverrouillage. L'élément mobile est alors libre de quitter la position dans laquelle il était retenu, l'olive entraînant le crochet de la position de retenue vers la position de libération.

Le boîtier d'accrochage est habituellement pourvu d'un capteur de proximité pour détecter la position dans laquelle l'organe de verrouillage se trouve. A cet effet, l'organe de verrouillage est équipé d'une cible mobile entre une position éloignée du capteur de proximité et une position proche du capteur de proximité, chaque position de la cible étant associée à l'une des positions de l'organe de verrouillage, de sorte que le signal électrique généré par le capteur de proximité change quand l'organe de verrouillage passe de la position de déverrouillage à la position de verrouillage et réciproquement. La détection de l'organe de verrouillage en position de verrouillage signifie que l'olive a repoussé le crochet vers la position de retenue dans laquelle il est automatiquement verrouillé, de sorte que cette détection correspond également à la détection indirecte de la retenue de l'élément mobile.

Cependant, il a pu arriver, alors que le crochet était bien détecté en position de retenue, que l'olive n'était en réalité pas retenue par le crochet en raison de la rupture d'une partie du crochet l'empêchant de retenir l'olive. Dans ces circonstances exceptionnelles, la détection du crochet en position de retenue ne garantit pas que l'élément mobile soit effectivement retenu.

Il a été proposé dans le document WO2018/189299 de munir le boîtier d'un deuxième capteur de proximité pour détecter si l'olive est effectivement présente dans le crochet quand celui-ci est en position de retenue. A cet effet, une deuxième cible est portée par un levier indicateur repoussé par l'olive elle-même, et qui place la deuxième cible dans une position éloignée du capteur si l'olive n'est pas dans le crochet, et dans une position proche du deuxième capteur si l'olive est dans le crochet en position retenue. Ainsi, l'élément mobile sera considéré comme effectivement retenu si le premier capteur indique que l'organe de verrouillage est en position de verrouillage et si le deuxième capteur indique que l'olive est bien présente dans le crochet. Cette disposition implique l'utilisation forcément moins robuste de deux capteurs, et nécessite de réaliser une combinaison logique de deux signaux.

Dans ce même document, il a également été proposé de n'utiliser qu'un seul capteur de proximité, en plaçant celui-ci sur le boîtier d'accrochage de sorte qu'il soit apte à détecter la présence simultanée à proximité de deux cibles liées respectivement à l'organe de verrouillage et au levier indicateur, les deux cibles ne s'approchant du capteur de proximité que si l'organe de verrouillage e crochet est en position de verrouillage et si l'olive est présente dans le crochet. La détection simultanée de plusieurs cibles proches par un même capteur est cependant délicate à régler et peut générer de fausses détections.

### OBJET DE L'INVENTION

L'invention a pour but de proposer un boîtier d'accrochage permettant la détection sûre du crochet en position de retenue et de l'olive présente dans le crochet, sans nécessiter des traitements logiques ou des réglages multi-cibles délicats.

### RESUME DE L'INVENTION

En vue de la réalisation de ce but, on propose un boîtier d'accrochage pour la retenue sélective d'une olive d'un élément mobile, le boîtier d'accrochage comportant :
- un crochet mobile entre une position de libération et une position de retenue d'une olive de l'élément mobile ;
- un organe de verrouillage interagissant avec le crochet et mobile entre une position de verrouillage dans laquelle il immobilise le crochet en position de retenue, et une position de déverrouillage dans laquelle le crochet est libre de se déplacer sous la poussée de l'olive de l'élément mobile ;
- des moyens de détection adaptés à détecter une situation dans laquelle le crochet est en position de retenue et si l'olive est présente dans le crochet.

Selon l'invention, les moyens de détection comportent un capteur et une cible mobiles relativement entre une position rapprochée et une ou des positions éloignées l'un de l'autre, l'un de la cible ou du capteur étant porté par l'organe de verrouillage et l'autre de la cible ou du capteur étant porté par un levier indicateur interagissant avec l'olive et mobile entre une première position indicatrice de l'absence de l'olive dans le crochet et une deuxième position indicatrice de la présence de l'olive dans le crochet, de sorte que la cible et le capteur ne sont en position rapprochée que si l'organe de verrouillage est en position de verrouillage et si le levier indicateur est dans la deuxième position indicatrice de la présence de l'olive dans le crochet.

Lorsqu'il est indiqué que deux éléments sont en interaction, on entend ici que le mouvement d'un élément provoque le mouvement de l'autre élément, soit directement, soit via un ou plusieurs éléments intermédiaires. Ainsi, conformément aux dispositions de l'invention, le signal du capteur n'est modifié que si la cible et le capteur sont en position rapprochée, ce qui ne peut se produire que si les deux conditions recherchées, à savoir le crochet en position de retenue et l'olive présente dans le crochet sont simultanément remplies. On réalise donc selon l'invention une fonction logique et mécanique, qui présente l'avantage de n'utiliser qu'une seule cible et qu'un seul capteur, et ne requiert aucun traitement logique.

Selon un aspect particulier de l'invention, le levier indicateur est monté pivotant sur le boîtier d'accrochage. Selon une disposition particulière, le levier indicateur et le crochet sont montés pivotants sur un même pivot.

### BREVE DESCRIPTION DES DESSINS

L'invention sera mieux comprise à la lumière de la description détaillée qui suit d'un mode particulier de réalisation de l'invention en référence aux dessins annexés parmi lesquels :
[Fig. 1] la figure 1 est une vue schématique de face d'un boîtier d'accrochage selon un mode particulier de réalisation de l'invention, illustré alors que le crochet est en position de libération, l'olive de l'élément mobile s'approchant du crochet ;
[Fig. 2] la figure 2 est une vue analogue à celle de la figure 1, illustrant le crochet en position de verrouillage alors que l'olive est effectivement retenue par le crochet ;
[Fig. 3] la figure 3 est une vue analogue à celle de la figure 1, illustrant le crochet en position de verrouillage alors que l'olive s'est libérée du crochet à la suite d'une rupture d'une partie de celui-ci.

### DESCRIPTION DETAILLEE DE L'INVENTION

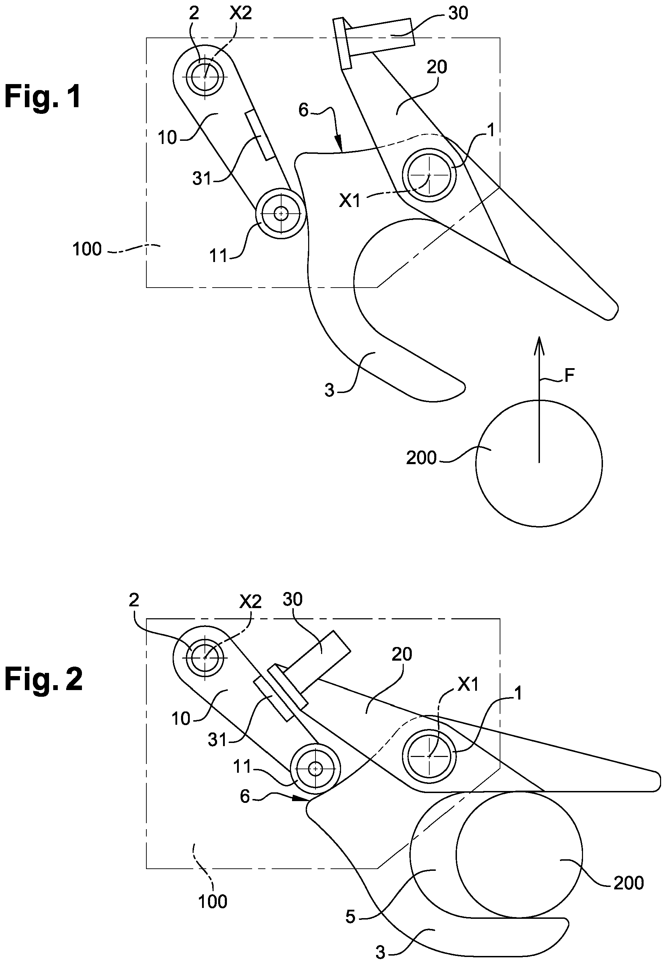

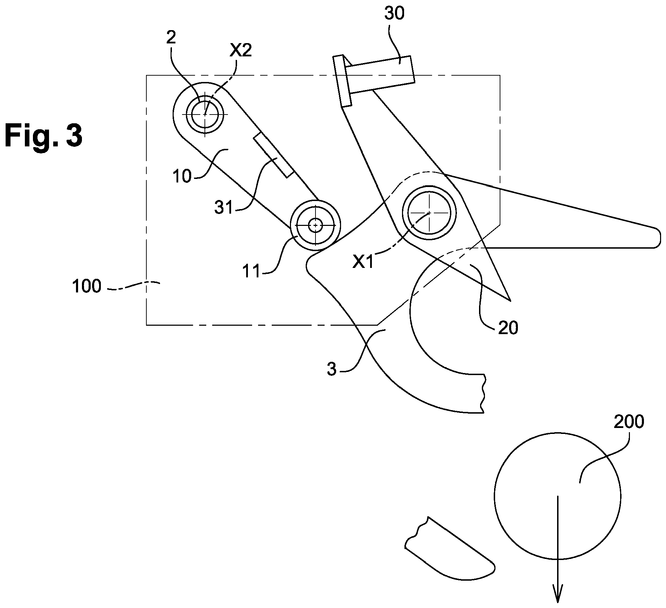

En référence aux figures, le boîtier d'accrochage de l'invention comporte une platine 100 portant un premier pivot 1 et un deuxième pivot 2, définissant des axes de pivotement X1 et X2 parallèles. Un crochet 3 est monté pivotant sur le premier pivot 1 selon l'axe X1 entre une position de libération illustrée à la figure 1 vers laquelle il est rappelé par un ressort (non représenté), et une position de retenue illustrée sur les figures 2 et 3. Le crochet 3 comporte une partie de crochetage 5 dans laquelle une olive 200 d'un élément mobile (par exemple un atterrisseur d'aéronef, ou une porte de soute) est destinée à être retenue par le boîtier d'accrochage pour immobiliser l'élément mobile (par exemple en position escamotée pour l'atterrisseur, ou en position fermée pour la porte de soute). Pour ce faire, l'élément mobile est déplacé par un actionneur de manoeuvre et l'olive 200 suit la trajectoire F en repoussant le crochet 3 vers la position de verrouillage dans laquelle il retient l'olive 200. A cet effet, un organe de verrouillage 10 est monté pivotant sur le deuxième pivot 2 selon l'axe X2 et comporte un galet 11 qui est en permanence en appui sur un profil de came 6 du crochet 3. L'organe de verrouillage 10 pivote entre une position de déverrouillage illustré à la figure 1, et une position de verrouillage illustrée sur les figures 2 et 3 dans laquelle il est rappelé automatiquement par un ressort (non représenté) et qu'il atteint automatiquement quand le crochet 3 arrive en position de retenue. Dans la position de verrouillage, l'organe de verrouillage 10 bloque le crochet 3 en position de retenue. Pour libérer l'olive 200, un actionneur de déverrouillage non représenté repousse l'organe de verrouillage 10 vers la position de déverrouillage, ce qui permet au crochet 3 de pivoter vers la position de libération et donc à l'olive 200 de quitter le crochet 3.

Le boîtier d'accrochage comporte par ailleurs un levier indicateur 20, ici monté pivotant sur le premier pivot 1 selon l'axe X1, et mobile entre une position indicatrice de présence de l'olive 200 dans le crochet 3 illustrée à la figure 2, dans laquelle il est repoussé par l'olive 200 quand celle-ci approche du crochet 3, et une position indicatrice d'absence de l'olive 200 dans le crochet 3, illustrée sur les figures 1 et 3, vers laquelle le levier indicateur 20 est rappelé par un ressort (non représenté).

Le boîtier d'accrochage comporte par ailleurs un capteur de proximité 30 porté ici par le levier indicateur 20, et une cible 31 portée ici par l'organe de verrouillage 10. Le capteur de proximité 30 et la cible 31 sont mobiles relativement entre une position rapprochée telle qu'illustrée à la figure 2, et une ou des positions éloignées illustrées aux figures 1 et 3. Le capteur de proximité 30 produit un signal électrique dont les caractéristiques changent lorsque la cible 31 et le capteur de proximité 30 passent d'une position relative à l'autre, ce qui permet de discriminer les deux positions de la cible 31 relativement au capteur de proximité 30.

Le fonctionnement du boîtier d'accrochage de l'invention est le suivant. La situation de départ est illustrée à la figure 1 où le crochet 3 est en position de libération, l'organe de verrouillage 10 en position de déverrouillage et le levier indicateur 20 en position indicatrice d'absence d'olive dans le crochet 3. Dans cette position, le capteur de proximité 30 et la cible 31 sont éloignés l'un de l'autre. L'élément mobile est alors manoeuvré pour se rapprocher de sa position d'immobilisation. L'olive 200 se déplace alors selon la direction F et repousse le crochet 3 vers la position de retenue et le levier indicateur 20 vers la position indicatrice de présence de l'olive 200 dans le crochet 3. Quand le crochet 3 atteint la position de retenue, l'organe de verrouillage 10 se place automatiquement en position de verrouillage pour bloquer le crochet 3 en position de retenue, tandis que le levier indicateur 20 est repoussé dans la position d'indication de présence de l'olive dans le crochet. Dans cette position illustrée à la figure 2, le capteur de proximité 30 et la cible 31 sont rapprochés l'un de l'autre, de sorte que le signal du capteur de proximité 30 change, ce qui permet de déterminer que l'olive 200 est bien retenue par le crochet.

Il peut arriver que le crochet 3 se brise et ne retienne plus l'olive 200. Dans cette situation illustrée à la figure 3, l'olive 200 a quitté le crochet 3 (par exemple sous l'effet de la gravité) alors que celui-ci est bien immobilisé en position de retenue. Ce faisant, le levier indicateur 20 est revenu sous l'effet de son ressort de rappel à la position indicatrice d'absence d'olive dans le crochet, de sorte la cible 31 s'est éloignée du capteur de proximité 30. Le signal de celui-ci change, indiquant que l'olive 200 n'est plus retenue par le crochet 3, bien que celui-ci reste immobilisé en position de retenue.

Ainsi, et selon une caractéristique essentielle de l'invention, la cible 31 ne peut atteindre la position proche du capteur de proximité 30 que si, simultanément, le crochet 3 est verrouillé en position de retenue et si l'olive 200 est effectivement présente dans le crochet. Les dispositions de l'invention permettent de réaliser une fonction logique et de façon mécanique, ne nécessitant l'usage que d'une cible et d'un capteur.

L'invention n'est pas limitée à ce qui vient d'être décrit, mais englobe au contraire toute variante entrant dans le cadre défini par les revendications.

En particulier, bien qu'ici on ait décrit l'utilisation d'un capteur de proximité coopérant avec une cible dédiée, on pourra utiliser d'autres technologies, comme un micro-contacteur ou un capteur optique. Dans ce cas, la cible sera directement celui de l'organe de verrouillage ou du levier indicateur qui ne porte pas le capteur.

Bien qu'ici le capteur soit porté par le levier indicateur et la cible soit portée par l'organe de verrouillage, on pourra bien sûr intervertir cette disposition, en faisant porter le capteur par l'organe de verrouillage et la cible par le levier indicateur.

Bien qu'ici le levier indicateur soit monté pivotant sur le même pivot que le crochet, le levier indicateur pourra être monté pivotant sur un autre pivot, par exemple le pivot de l'organe de verrouillage ou tout autre pivot. Plus généralement, bien que l'on ait indiqué que le levier indicateur soit monté pivotant, il pourra être prévu mobile par interaction avec l'olive, de sorte qu'il présente au moins une position relative rapprochée avec l'organe de verrouillage, et une ou plusieurs positions relatives éloignées de l'organe de verrouillage.

Bien entendu, pour assurer une redondance, il est possible d'utiliser un deuxième ensemble capteur/cible, le cas échéant en utilisant un deuxième levier indicateur.

## Revendications

1. Boîtier d'accrochage pour la retenue sélective d'une olive d'un élément mobile, le boîtier d'accrochage comportant :
- un crochet (3) mobile entre une position de libération et une position de retenue d'une olive de l'élément mobile ;
- un organe de verrouillage (10) interagissant avec le crochet et mobile entre une position de verrouillage dans laquelle il immobilise le crochet en position de retenue, et une position de déverrouillage dans laquelle le crochet est libre de se déplacer sous la poussée de l'olive de l'élément mobile ;
- des moyens de détection adaptés à détecter une situation dans laquelle le crochet est en position de retenue et si l'olive est présente dans le crochet ;
**caractérisé en ce que** les moyens de détection comportent un capteur (30) et une cible (31) mobiles relativement entre une position rapprochée et une ou des positions éloignées l'un de l'autre, l'un de la cible ou du capteur étant porté par l'organe de verrouillage et l'autre de la cible ou du capteur étant porté par un levier indicateur (20) interagissant avec l'olive et mobile entre une première position indicatrice de l'absence de l'olive dans le crochet et une deuxième position indicatrice de la présence de l'olive dans le crochet, de sorte que la cible et le capteur ne sont en position rapprochée que si l'organe de verrouillage est en position de verrouillage et si le levier indicateur est dans la deuxième position indicatrice de la présence de l'olive dans le crochet.

2. Boîtier d'accrochage selon la revendication 1, dans lequel le levier indicateur (20) est monté pivotant sur le boîtier d'accrochage.

3. Boîtier d'accrochage selon la revendication 2, dans lequel le levier indicateur (20) et le crochet (3) sont montés pivotants sur un même pivot.

4. Boîtier d'accrochage selon la revendication 1, comprenant, à des fins de redondance, deux ensembles comportant chacun un capteur (30) et une cible (31) disposés pour que de sorte que la cible et le capteur ne soient en position rapprochée que si l'organe de verrouillage est en position de verrouillage et si le levier indicateur est dans la deuxième position indicatrice de la présence de l'olive dans le crochet.

5. Boîtier d'accrochage selon la revendication 4, dans lequel chaque ensemble comporte un levier indicateur (20).

6. Boîtier d'accrochage selon l'une quelconque des revendications précédentes, dans lequel le capteur (30) est un capteur de proximité.

7. Train d'atterrissage comprenant un élément mobile entre une première position et une deuxième position dans laquelle une olive (200) solidaire de l'élément mobile est reçue dans le crochet (3) d'un boîtier d'accrochage selon l'une quelconque des revendications précédentes.

8. Train d'atterrissage selon la revendication 7, dans lequel l'élément mobile est un atterrisseur.

9. Train d'atterrissage selon la revendication 7, dans lequel l'élément mobile est une porte de soute.

## Patentansprüche

1. Sicherungsmechanismus zum selektiven Halten einer Olive eines beweglichen Elements, wobei der Sicherungsmechanismus umfasst:
- einen Haken (3), der zwischen einer Freigabeposition und einer Halteposition zum Halten einer Olive des beweglichen Elements beweglich ist;
- ein Verriegelungsorgan (10), das mit dem Haken interagiert und zwischen einer Verriegelungsposition, in der es den Haken in der Halteposition blockiert, und einer Entriegelungsposition beweglich ist, in der der Haken frei ist, sich unter dem Schub der Olive des beweglichen Elements zu verschieben;
- Detektionsmittel, die geeignet sind, eine Situation zu erkennen, in der sich der Haken in der Halteposition befindet und ob die Olive in dem Haken vorhanden ist;
**dadurch gekennzeichnet, dass** die Detektionsmittel einen Sensor (30) und ein Ziel (31) umfassen, die zwischen einer angenäherten Position und einer oder mehr voneinander entfernten Positionen relativ beweglich sind, wobei eines von Ziel oder Sensor von dem Verriegelungsorgan getragen wird und das andere von Ziel oder Sensor von einem Anzeigehebel (20) getragen wird, der mit der Olive interagiert und zwischen einer ersten Position, die das Fehlen der Olive in dem Haken anzeigt, und einer zweiten Position, die das Vorhandensein der Olive in dem Haken anzeigt, beweglich ist, derart, dass das Ziel und der Sensor nur in der angenäherten Position sind, wenn das Verriegelungsorgan in der Verriegelungsposition ist und wenn der Anzeigehebel in der zweiten Position ist, die das Vorhandensein der Olive in dem Haken anzeigt.

2. Sicherungsmechanismus nach Anspruch 1, bei dem der Anzeigehebel (20) drehbar an dem Sicherungsmechanismus gelagert ist.

3. Sicherungsmechanismus nach Anspruch 2, bei dem der Anzeigehebel (20) und der Haken (3) drehbar an einem selben Zapfen gelagert sind.

4. Sicherungsmechanismus nach Anspruch 1, umfassend zum Zwecke der Redundanz zwei Einheiten, die jeweils einen Sensor (30) und ein Ziel (31) umfassen, die derart angeordnet sind, dass das Ziel und der Sensor nur in der angenäherten Position sind, wenn das Verriegelungsorgan in der Verriegelungsposition ist und wenn der Anzeigehebel in der zweiten Position ist, die das Vorhandensein der Olive in dem Haken anzeigt.

5. Sicherungsmechanismus nach Anspruch 4, bei dem jede Einheit einen Anzeigehebel (20) umfasst.

6. Sicherungsmechanismus nach einem der vorhergehenden Ansprüche, bei dem der Sensor (30) ein Näherungssensor ist.

7. Fahrwerksanlage, umfassend ein Element, das zwischen einer ersten Position und einer zweiten Position beweglich ist, in der eine Olive (200), die fest mit dem beweglichen Element verbunden ist, in dem Haken (3) eines Sicherungsmechanismus nach einem der vorhergehenden Ansprüche aufgenommen ist.

8. Fahrwerksanlage nach Anspruch 7, bei dem das bewegliche Element ein Fahrwerk ist.

9. Fahrwerksanlage nach Anspruch, bei dem das bewegliche Element eine Laderaumtür ist.

## Claims

1. An uplock for the selective retention of a capture pin of a movable element, the uplock comprising:
a hook (3) which is movable between a release position and a position for retaining a capture pin of the movable element;
a locking member (10) interacting with the hook and movable between a locked position in which it immobilizes the hook in the retaining position, and an unlocked position in which the hook is free to be displaced under the force of the capture pin of the movable element;
detection means adapted to detect a situation in which the hook is in the retaining position and if the capture pin is present in the hook;
**characterized in that** the detection means comprise a sensor (30) and a target (31) which are movable relative to each other between a proximate position and one or more positions which are remote from each other, one of the target or the sensor being carried by the locking member and the other of the target or the sensor being carried by an indicator lever (20) which interacts with the capture pin and which is movable between a first position which is indicative of the absence of the capture pin in the hook and a second position which is indicative of the presence of the capture pin in the hook, so that the target and the sensor are only in the proximate position if the locking member is in the locked position and if the indicator lever is in the second position which is indicative of the presence of the capture pin in the hook.

2. The uplock as claimed in claim 1, in which the indicator lever (20) is pivotally mounted on the uplock.

3. The uplock as claimed in claim 2, in which the indicator lever (20) and the hook (3) are pivotally mounted on the same pivot.

4. The uplock as claimed in claim 1 comprising, for redundancy purposes, two assemblies each comprising a sensor (30) and a target (31) disposed in a manner such that the target and the sensor are in the proximate position only if the locking member is in the locked position and if the indicator lever is in the second position which is indicative of the presence of the capture pin in the hook.

5. The uplock as claimed in claim 4, in which each assembly comprises an indicator lever (20).

6. The uplock as claimed in any one of the preceding claims, in which the sensor (30) is a proximity sensor.

7. A landing gear assembly comprising an element which is movable between a first position and a second position in which a capture pin (200) that is integral with the movable element is received in the hook (3) of an uplock as claimed in any one of the preceding claims.

8. The landing gear assembly as claimed in claim 7, in which the movable element is landing gear.

9. The landing gear assembly as claimed in claim 7, in which the movable element is a cargo hold door.
